# EUROPÄISCHE PATENTANMELDUNG

(11) **EP 1 900 956 A2**
(43) Veröffentlichungstag der Anmeldung: **19.03.2008**
(21) Anmeldenummer: 07114317.6
(22) Anmeldetag: 14.08.2007
(51) Int. Cl.: F16D 23/06

(54) **Getriebesynchronisierung, insbesondere in der Form einer Servo-Synchronisierung**

(30) Priorität: 18.09.2006 DE 102006044352
(71) Anmelder: Hofer-PDC-Gmbh, Gerolzhofen (DE)
(72) Erfinder: Dipl.-Ing. Hackl, Thomas, 4645 Sattledt (AT); Dr.-Ing. Berger, Martin, 70327 Stuttgart (DE); Dr.-Ing. Kalmbach, Klaus, 72116 Mössingen (DE); Dipl.-Ing. (FH) Steinz, Janina, 64584 Biebesheim (DE)
(74) Vertreter: Cremer & Cremer

(57) **Zusammenfassung**

Die vorliegende Erfindung betrifft ein Synchronisationsstück, das als Teil einer Servo-Synchronisation mit einer Schiebemuffe, einem Kupplungskörper, einem Synchronring und einem Losrad ein Getriebe mit Zahnradübersetzungen synchronisieren kann. Weiterhin betrifft die vorliegende Erfindung eine gesamte Synchronisierung mit einem erfindungsgemäßen Synchronisationsstück. Daneben wird eine Vollservosynchronisation vorgestellt. Der Servo-Synchronisationsdruckstück ist kippbeweglich und eine I form mit abgeschrägten Eckbereichen aufweist.

## Beschreibung

Die vorliegende Erfindung betrifft ein Synchronisationsstück, das als Teil einer Servo-Synchronisation mit einer Schiebemuffe, einem Kupplungskörper, einem Synchronring und einem Losrad ein Getriebe mit Zahnradübersetzungen synchronisieren kann. Weiterhin betrifft die vorliegende Erfindung eine gesamte Synchronisierung mit einem erfindungsgemäßen Synchronisationsstück. Daneben wird eine Vollservosynchronisation vorgestellt.

Ein Synchronisationsstück wird im Sprachgebrauch der Getriebeentwickler auch als Druckstück bzw. Synchronisationsdruckstück bezeichnet.

Wie auf der VDI-Tagung "Getriebe in Fahrzeugen 2006", dargelegt im entsprechenden Tagungsband auf den Seiten 171-192 des Herausgebers VDI-Wissensforum, ISBN 3-18-091943-4, ausführlich vorgetragen worden ist, ist ein KYOWA HIGH PERFORMANCE SYNCHRONIZER (KHS) zwischenzeitlich in der Fachwelt bekannt, der als H-Glied eine Rastsynchronisation nach dem Servo-Synchronisationsprinzip durchführen kann. Das Prinzip der Servo-Synchronisation ist zum Beispiel in der US-A-3 548 983 bzw. dem deutschen Familienmitglied DE 19 24 724 C (veröffentlicht am 20.11.1969, Patentinhaberin Nissan Motor Co.) detaillierter dargelegt, wobei die Erklärungen zur Servo-Synchronisation dieser Druckschrift voll inhaltlich als Offenbarungsumfang des vorliegenden Schutzrechtes hierin inkorporiert sind.

Eine Synchronisation wird als Servosynchronisation bezeichnet, wenn die Energie aus dem Drehmoment der zueinander verdrehbaren Zahnräder genutzt wird, um den Synchronisationsvorgang zu erleichtern. Vorteilhaft wäre bei einer Servosynchronisation auch die Reduktion der notwendigen Kraft für das Entsperren zwischen Schiebemuffe und Synchronring. In der Regel ist die Entsperrkraft auch bei Servosynchronisationen zum Teil höher als die durch den Schaltvorgang aufzuwendende Synchronkraft. Die über den Schalthebel des Schaltgestänges auf die Synchronisation aufgebrachte Schaltkraft wird bei einer Servosynchronisation verstärkt.

Weitere Arten, das Synchronisationsmoment vorteilhaft bei einer Getriebesynchronisation zu nutzen, können zum Beispiel aus der US-A-4 573 371, der US-A-4 674 614 und der US-A-5 924 535 entnommen werden. Die US-A-5 924 535 bzw. ihre Querverweise bezeichnen die Nutzung des Synchronisationsmoments als "eigenenergetische" Synchronisation unter Nutzung der Rampenreibung. Auch die Beschreibungen zu der Servosynchronisation gem. der letztgenannten Dokumente wird vollinhaltlich als Teil der Offenbarung der vorliegenden Erfindung hierin aufgenommen. Es sei hervorgehoben, dass in den Druckschriften zum Teil von Rampenreibung oder eigenenergetischer Nutzung des Einspurvorgangs gesprochen wird, wenn damit die Servosynchronisation gemeint ist.

Aus der DE 1 650 814 A ist ein ballenartiges Druckstück für jeden Gleichlaufring bekannt, das sich aus drei Kugeln, die aufreiht sind, zusammensetzt. Das Druckstück liegt unter einem Spreiz-Kreisringsegment. Mit der Spreizwirkung des Kreissegments, insbesondere seinen beiden Enden, wird ein radiales Servo-Synchronisationsprinzip realisiert.

Das Taumeln zweier gegenüberliegender Synchronringe kann dadurch unterbunden werden, s. zum Beispiel DE 10 2004 036 507 B3 und DE 24 31 324 A, dass ein druckstückartiges Element von einem Synchronring zum nächsten Synchronring reicht und in beide sich anschauenden Synchronringe eingreift. Hierdurch werden die beiden Synchronringe zueinander verspannt.

Das bekannte H-Druckstück zeichnet sich gegenüber den früheren Synchronisationsdruckstücken durch seine Einfachheit aus. Es kann in bekannten Synchronisationen verbaut werden, ohne die übrigen Teile wesentlich ändern zu müssen. Das bedeutet, der Änderungsaufwand bei Einführung eines H-Druckstücks ist überschaubar, eine Kundenfreigabe leichter erhältlich. Nachteilig ist die Notwendigkeit, die Enden des H-Stücks während der Herstellung noch einmal gesondert zu härten. Außerdem darf eine Mindestwandstärke der Enden nicht unterschritten werden, um den auftretenden Kräften standzuhalten. Ein H-Stück hat durch seine Form bedingt eine Mindestbreite. Die Nabe ist rund, sodass das H-Stück von sich aus auf Grund seiner Krümmung eine gewisse Kerbwirkung entfaltet. Die Entsperrkraft ist, wie bei einer herkömmlichen Synchronisation, nicht reduziert.

Zu lösen gilt also die Aufgabe, als Alternative ein verbessertes Druckstück zu schaffen, das gut als Servo-Synchronisationsdruckstück eingesetzt werden kann. Daneben steckten die Erfinder der vorliegenden Erfindung sich das Ziel, eine komplette Synchronisationseinheit zu schaffen, die auf ein erfindungsgemäßes Druckstück zurückgreift und diese in einer Getriebesynchronisation einzusetzen.

Die Aufgabe wird durch ein Druckstück nach Anspruch 1 gelöst. Eine erfindungsgemäße Getriebesynchronisation ist dem Anspruch 8 zu entnehmen. Eine kompakte, in sich selbst abgeschlossene Einheit zur Verwendung mit bzw. Montage in einem Kraftfahrzeugetriebe ist dem Anspruch 12 zu entnehmen. Eine solche Einheit kann erfindungsgemäß nach einem Verfahren gem. Anspruch 19 arbeiten.

Vorteilhafte Ausgestaltungen sind den abhängigen Ansprüchen zu entnehmen.

Im Sinne der Erfindung wird als I-förmiges Druckstück ein Teil verstanden, das in einem Bereich einen taillierten, also eingeschnürten Abschnitt, und in weiteren, sich an den taillierten Bereich anschließenden, Bereichen breitere Abschnitte aufweist. Abschnittsweise sieht das Druckstück wie ein druckbuchstabliches, groß geschriebenes I aus. In heutigen Handschaltgetrieben ist es üblich, spiegelbildlich angeordnete Synchronisationsanordnungen zu wählen. Je nach Verschieben der Schiebemuffe kann von einer Antriebswelle auf zwei unterschiedliche Losräder, die sich gegenseitig anschauen, wechselweise aufsynchronisiert werden. Daher ist ein erfindungsgemäßes Druckstück an seinem mittigen Abschnitt mit zwei Querbereichen fortgeführt. Diese Gestaltung trägt dazu bei, vorteilhaft das Drehmoment aus der Antriebswelle zu nutzen.

Bei einseitigen Synchronisationsanordnungen kann einer der beiden Querbereiche entfallen. Die Funktion eines dann etwas unsymmetrisch aufgebauten Druckstücks folgt dem erfinderischen Prinzip.

Im Folgenden wird der allgemeine, übliche Sprachgebrauch von Getriebeentwicklern verwendet, um die unterschiedlichen Phasen, häufig in fünf Phasen unterteilt, eines Getriebesynchronisationsvorganges mit einer Schiebemuffe bzw. einer Schaltmuffe zu beschreiben. In diesem Zusammenhang wird als Synchronisations- und Sperrphase der Zustand im Bewegungsablauf bezeichnet, zu dem die Zähne des Synchronringes an den Verzahnungen der Schaltmuffe zur Anlage kommen und bleiben. Der Entsperrvorgang beginnt dann, wenn der Gleichlauf zwischen Welle und Losrad eingetreten ist und die Anlage zwischen den Verzahnungen der Schaltmuffe und des Synchronrings im Begriff steht, sich durch gegenseitiges Verdrehen zu lösen. Die Erfindung ist in bisher bekannten Getriebesynchronisationen einzusetzen.

Bei Synchronisationseinheiten, in denen eine Getriebesynchronisation stattfindet, ist das Synchronisationsdruckstück ein wesentliches Bauteil. Das Synchronisationsdruckstück sorgt bei Zahnradwechselgetrieben, wie zum Beispiel Handschaltgetrieben von Kraftfahrzeugen, für einen ersten Eingriff in den Synchronring, der ein Außensynchronisationsring sein kann. Wenn das Synchronisationsdruckstück als I-Form ausgestaltet ist, kann es in seinem mittleren Bereich, zum Beispiel über einen Zentralpin, so gelagert werden, dass es kippbeweglich eine Servosynchronisationsbewegung durchführen kann. In den Eckbereichen können Schrägen vorgesehen sein. Die Schrägen tragen zur besseren Anlagerung an den Nuten und Ausnehmungen der Gegenflächen bei. Als kippbeweglich wird eine solche Bewegung bezeichnet, bei der um einen, vorzugsweise zentralen, Lagerpunkt herum das Druckstück entweder horizontale oder auch vertikale Auf- und Abbewegungen innerhalb eines bestimmten Winkelbereiches, vorzugsweise alle Bewegungen, durchführen kann. Die Lagerung und ihre Art tragen zur günstigen Realisierung des erfindungsgemäßen Prinzips bei.

Die I-Form des Synchronisationsdruckstücks ergibt sich bei einer Ausgestaltung durch einen mittleren, längsartigen Bereich, der durch hammerartige, über den mittleren Bereich hinausstehende, Querstrecken begrenzt ist. Das Druckstück ist in seiner Länge von Querstrecke zu Querstrecke so ausgelegt, dass es sich über die Breite einer Nabe der Getriebewelle erstrecken kann. Die Querstrecken verlaufen in einem nahezu rechten Winkel, vorzugsweise einem 90°-Winkel, zum mittleren Teil. Das I-förmige Druckstück ist insgesamt flach. Der mittlere, insgesamt längere Bereich ist um vieles schmaler als die vorhandenen Querstrecken. Teilungsverhältnisse von 1:1,2 bzw. sogar 1:2 oder sogar 1:2,5 können bei Ausgestaltungsbeispielen zwischen der Breite des mittleren, taillierten Bereichs und der in gleiche Richtung sich erstreckenden Querstrecken als vorteilhaft gewählt werden. Die Form des Druckstücks fördert die leichte Herstellbarkeit gegenüber bekannten Druckstücken, z. B. kann bei manchen Ausgestaltungen ein späteres Einsatzhärten der Anlage- und Berührungsteile des Druckstücks vermieden werden. Auch sind die Anforderungen in Bezug auf die Abnutzung durch die Formgebung reduziert.

Das Druckstück kann abgeschrägte Eckbereiche aufweisen. Ein mittlerer Teil des Druckstücks weist in seinem Anschluss nach außen und geht so in die Querstrecken über. Auf der Innenseite der Querstrecken, das ist die Seite, die zur Mitte des I-förmigen Druckstückes weist, sind die nach außen weisenden Schrägen angeordnet.

In einer Nabe der Welle ist zumindest eine Ausnehmung vorgesehen. Die Ausnehmung in der Nabe ist so gestaltet, dass abgeschrägte Eckbereiche des Synchronisationsdruckstückes gleichwinklig in die Nabe eingreifen können. Das Anlagern und Eingreifen in die Ausnehmungen erfolgt durch ein horizontales Abwinkeln, vorzugsweise in Umlaufrichtung der Nabe. Durch die Formgebung gehören Druckstück und seine entsprechende Nabenausnehmung zusammen und greifen günstig ineinander ein.

Über die zentrale I-Form des Druckstückes hinaus können noch weitere Bereiche vorhanden sein. Ein solcher Bereich kann eine radiale oder axiale Extremität, wie zum Beispiel eine Nase, sein. In Fortsetzung des zentralen, mittleren Teils, unterbrochen durch die Querstrecken, reichen die Nasen, vorzugsweise beidseitig, als Verlängerungen des Synchronisationsdruckstückes über die Breite der Nabe hinaus, und sind so gestaltet, dass sie in Ausnehmungen eines Synchronringes einer Getriebesynchronisation vorstoßen können. Der Abschnitt des Druckstücks ist während der Synchronisationsphase im Eingriff.

Wenn das Druckstück geschichtet betrachtet wird, hat es nach einem Ausgestaltungsbeispiel eine breiteste Schicht an seiner nach oben gerichteten Oberfläche, aus der wahlweise ein kegeliger Momentanpol hinausragen kann. Die Schichten darunter sind schmaler. Die sich daraus ergebenden Seitenwände des Druckstücks sind somit nach innen verlaufend.

Als Material lässt sich ein Blech verwenden, das die äußere Kontur des Druckstückes wiedergibt. In diesem Falle ist das Druckstück innen hohl. Trotzdem lassen sich einzelne Schichten durch das Druckstück ziehen. Die unterste Schicht ist dann die schmalste Schicht des I-förmigen Kerns des Druckstücks. Die nach innen verlaufenden Seitenwände des Druckstücks bilden einen gewissen Sperrwinkel für das Einstellen einer Entsperrkraft beim Gleichlauf zwischen Synchronring und Schaltmuffe. In vielen typischen Getriebeauslegungen ist die Schaltmuffe als Schiebemuffe gestaltet, so dass im Folgenden in synonymer Verwendung von einer Schiebemuffe gesprochen wird, wenn hierdurch auch eine reine Schaltmuffe gemeint ist.

Vorteilhaft ist das Synchronisationsstück aus einem zusammenhängenden Blechteil durch Stanzen, Umformen, Umbördeln, Abwinkeln oder Abkanten geschaffen worden. Durch diese Bearbeitungsschritte bilden sich umgebördelte oder abgerundete Kanten. Es entsteht ein flaches, längliches Bauteil, in dessen ungefährer Mitte ein Momentanpol eingestanzt sein kann. Nach einem weiteren Ausgestaltungsbeispiel kann der Momentanpol auch in der Form einer eingeprägten oder tiefgezogenen Kappe vorhanden sein. In den räumlichen Körper des zusammenhängenden Blechteils können einzelne Wände, die keine Funktion wahrnehmen, materialsparend ausgespart werden, so dass ein räumlicher Körper entsteht, bei dem einzelne Seiten und Abschnitte von Seiten nur teilflächig vorhanden sind.

Ein erfindungsgemäßes Synchronisationsdruckstück kann zur Bildung einer Getriebesynchronisation zusammen mit einer Schiebemuffe, einer Synchronnabe, einem Gangrad, einem Synchronring und einem Kupplungskörper aufgebaut werden, so dass sie alle Teile einer Servosynchronisation bilden. Für viele Teile können langzeiterprobte Teile aus klassischen Getriebesynchronisationen eingesetzt werden.

Im Sinne der vorliegenden Erfindung wird von einer Servosynchronisation gesprochen, wenn das Drehmoment der Antriebswelle oder der damit verbundenen Bauteile vorteilhaft verstärkend genutzt wird und hierdurch die notwendige, einzuleitende Kraft, zum Beispiel über die Schaltkraft, während des Ansynchronisierens reduziert wird. Von einer Vollservosynchronisation wird dann gesprochen, wenn die Energie aus der Schiebemuffe, insbesondere über eine Nut, auf das Druckstück übertragbar ist und aus dem daraus abgeleiteten entgegenwirkenden Drehmoment auch das Entsperren erleichtert wird. Je nach Ausgestaltung des I-förmigen Stabes, der einen wesentlichen Teil des Synchronisationsdruckstückes darstellt, handelt es sich um eine Servosynchronisation oder sogar um eine Vollservosynchonisation. Bei einer Vollservosynchronisation über das Druckstück gibt es mehrere Kraft- und Drehmomenteinleitungsstellen bzw. -bereiche in dem Synchronisationsdruckstück. Im einfachsten Fall muss das Synchronisationsdruckstück zwei Einleitungspunkte aufweisen. Eine reine Servosynchronisation, vorzugsweise mit einem I-förmigen Druckstück, nutzt im einfachsten Falle über eine, sich in eine Extremität erstreckende, Seitenwand ein Drehmoment.

Die Getriebesynchronisation ist dadurch zu realisieren, dass das schwenkbewegliche Synchronisationsdruckstück eine nahezu punktförmige oder linienförmige Lagerung, vorzugsweise im mittleren Abschnitt des taillierten Bereiches, aufweist, um die herum in radialer Umlaufrichtung der Nabe eine Schwenkbewegung im Bezug auf die Antriebswelle, die unterhalb des Druckstückes liegt, durchführbar ist. Daneben ist das Synchronisationsdruckstück so gelagert, dass auch eine horizontale Ausgleichsbewegung durchführbar ist. Die Lagerung hat Einfluss auf die Freiheitsgrade des Duckstücks und die Gängigkeit des Druckstücks.

Eine Getriebesynchronisation kann so im Kraftfahrzeugbau umgesetzt werden, dass das Synchronisationsdruckstück mehrfach vorhanden ist. Die Synchronisationsdruckstücke werden umlaufend nahezu gleichmäßig verteilt innerhalb der Synchronisationseinheit angeordnet, damit die Servosynchronisationsanwendung bzw. die Vollservosynchronisationsanwendung symmetrisch über die gesamte Welle vorhanden ist. Nach einem Ausgestaltungsbeispiel können die Getriebesynchronisationsdruckstücke zum Beispiel in einem Abstand von 120° über dem Umlauf der Synchronisationsnabe platziert sein, um an drei Stellen das Drehmoment zu nutzen und gleichmäßig über den Umfang anzusynchronisieren.

Zur Schaffung einer Vollservosynchronisation kann die Schiebemuffe mit einer radialen Nut, bei mehreren Synchronisationsdruckstücken dementsprechend vielen radialen Nuten, zum Beispiel bei drei Synchronisationsdruckstücken also mit drei längs verlaufenden Nuten, ausgestattet sein, die insbesondere in ihren Randbereichen einen Kegelwinkel aufweisen. In die radiale Nut reicht ein Ende eines Zentralstiftes des Synchronisationsdruckstückes, damit eine Krafteinleitung in die Schiebemuffe während des Sperrens zum Drehzahlangleich zwischen Antriebswelle und Losrad und zum Entsperren bei Drehzahlgleichheit ermöglicht wird. Mittels des zentralen Stiftes bzw. einer Mittenerhöhung des Druckstücks, entweder einteilig oder auch zweiteilig ausgestaltet, wird die Schiebemuffe verstärkend in eine rotatorische Richtung, unter Nutzung des Drehmomentes, bewegt.

Wenn das Synchronisationsdruckstück als Vollservosynchronisationsdruckstück ausgestaltet ist, ist vorzugsweise der Lagerungsstift, geeignet für einen Nuteingriff, mittig in dem Druckstück angeordnet. Das Synchronisationsdruckstück greift in eine Ausnehmung eines Außensynchronisationsrings ein. Die Querstrecken des Synchronisationsdruckstückes sind mit Schrägen versehen. Das Servosynchronisationsdruckstück kann eine Ausgleichsbewegung in radialer Richtung in Bezug auf den Außensynchronisationsring ausüben. Der Bewegungsablauf ist in der Regel so gestaltet, dass zuvor eine Schwenkbewegung in Richtung auf eine Ausnehmung der Nabe der Antriebswelle durch das Druckstück stattgefunden hat. Aufgrund der Schwenkbewegung wird das Drehmoment über das Druckstück durch die Nabe nutzbar gemacht.

Die Ausnehmungen, die vorzugsweise am Außensynchronisationsring vorhanden sind, können nach einem Ausgestaltungsbeispiel keilförmig oder trapezförmig sein. Während des Sperrens in der Phase des Drehzahlangleiches zwischen dem Kupplungskörper und dem Außensynchronisationsring greift das Druckstück, das zum Beispiel dreimal oder auch zum Beispiel fünfmal oder sechsmal vorhanden sein kann, in die Ausnehmung am Außensynchronisationsring ein. Wenn der Drehzahlangleich stattgefunden hat, also nach Abschluss des Drehzahlangleiches, kann das jeweilige Druckstück in seiner ihm zugeordneten Ausnehmung im entsperrten Zustand verharren und hat keinen weiteren Einfluss.

Die radiale Nut in der Schiebemuffe ist mit ihrem Kegelwinkel so gestaltet, dass ein Ende des Zentralstiftes in der Synchronisationsphase vom Sperren bis zum Entsperren durch das Druckstück, der zwischen dem Synchronring und der Schiebemuffe stattfindet, zur Anlagerung und Kraftübertragung kommt. Die Seitenfläche an dem Synchronisationsdruckstück ist in ihrer Geometrie bzw. in ihrer Oberflächenschräge so abgestimmt, dass der Verlauf der Ausnehmung des Außensynchronisationsringes nachgebildet ist. Vorzugsweise handelt es sich um eine Schräge, die durch einen Winkel aus der Oberfläche des Synchronisationsdruckstückes bzw. aus der Oberseite des Synchronisationsdruckstückes nach unten, auf die Welle zu, herausweist. Durch diese Gestaltung wird die Reibungswirkung zwischen dem Druckstück und dem Außensynchronisationsring an der Berührungsfläche mit dem Ziel der leichteren Entsperrung reduziert. Die Entsperrbewegung, die eine radiale Bewegung sein kann, wird während der Entsperrphase durch die Lagerung des Druckstücks günstig beeinflusst.

Das Druckstück geht über den Kernbereich, der eine Form des Großbuchstabens I hat, zum Beispiel durch überstehende Nasen hinaus. Die Nasen können die Form eines Keils, eines Zylinders oder einer gelagerten Rolle haben. Die Nasen sind also Extremitäten. Geeignete Extremitäten können in axialer oder radialer Richtung, insbesondere am Rumpf des Druckstücks, vorhanden sein. Die Nasen übernehmen die Aufgabe des ersten Eingriffs in den Außensynchronring.

Das Druckstück kann abgeteilt von seinem Fuß auf einem nachgiebigen Element gelagert sein. Das Element kann eine Rastierlagerung sein. Die Anordnung mit einem nachgiebigen, zusammendrückbaren, elastischen Element erlaubt eine leichte Hubbewegung des Druckstücks beim Einfahren in die Schiebemuffennut. Ein nachgiebiges Element kann eine Feder sein, insbesondere eine Spiral- oder Druckfeder, die in einer sie horizontal umschließenden, kolbenartigen Öffnung in Spannrichtung geführt ist. Die Führung dient zur Höhenstabilisierung der Feder. Der Fuß kann weiterhin so gelagert sein, dass er in Antriebsrichtung eine verschiebliche Längsbewegung durchführen kann. Die weiteren Bewegungsfreiheitsgrade des Druckstücks mit sicherer Führung tragen zur besseren Ausgleichsbewegung des Druckstücks beim Synchronisationsvorgang bei.

Besondere Merkmale des Synchronisationsverfahrens nach dem Vollsynchronisationsprinzip, vorzugsweise mit erfindungsgemäßen Bauteilen, sind die vorteilhafte Nutzung des Drehmomentes sowohl für die Reduktion des notwendigen Sperrmomentes, wie auch die Reduktion der notwendigen Entsperrkraft. Durch die konstruktive Gestaltung des Druckstückes und seiner Lager- und Berührungsstellen kann die Sperrsicherheit des Druckstückes eingestellt werden. Bei einer Vollsynchronisation hat eine erfindungsgemäße Ausführungsform eine Schiebemuffe mit wenigstens einer Nut, vorzugsweise drei oder fünf Nuten, ein Druckstück, oder auch mehrere Druckstücke, und eine Wellennabe mit einer entsprechenden Anzahl Ausnehmungen für die einzelnen Druckstücke. Wird zum Beispiel ein I-förmiges Druckstück mittig mit einem Eingriff in die Nut geführt, so lässt sich die Entsperrkraft und die Synchronisationskraft in gleichem Maße gegenüber Druckstücken ohne Servosynchronisation reduzieren. Es soll kein Entsperren vor Erreichen der Drehzahlgleichheit gegeben sein. Durch die konstruktive Einstellung von Parametern, die sich aus der Oberflächenform und -struktur ergeben, lässt sich eine Sperrsicherheit von größer als 1 einstellen.

Die Schaltkraft, das ist die von Außen, zum Beispiel über das Schaltgestänge, aufgebrachte Kraft, an der Synchronisationseinheit wird während des Synchronisationsverfahrens verstärkt. Es ist durch die Abmessungen des Druckstücks, durch die Nut in der Schiebemuffe, durch den oder die Radien der Servoschrägen, und durch den Konusradius der Synchronisation ein geeigneter Verstärkungsfaktor einstellbar. Der Verstärkungsfaktor bezieht sich sowohl auf die Sperrkraft als auch auf die Entsperrkraft. Es wird das Synchronmoment oder das Reibmoment genutzt. Die Schaltkraft ist niedriger als die für die Synchronisierung aufgebrachte Kraft.

Mit einem erfindungsgemäßen Synchronisationsdruckstück in Doppelhammerform mit überstehenden Stielen, auch als I-Form mit Nasen beschrieben, schwenkbeweglich gelagert um einen mittleren Lagerpunkt, im Eingriff stehend, in Abhängigkeit der jeweiligen Schwenklage, sowohl mit einer Ausnehmung in der Nabe als auch an einer Schräge in der Nut der Schiebemuffe, lässt sich die Schaltkraft, die notwendig für die Synchronisierung ist, reduzieren. Das führt dazu, dass insbesondere in den unteren Gängen, die Anzahl der Synchronisationskonen reduziert werden kann. Die Erfindung bricht mit der weithin beobachteten Tendenz, die notwendigen Schaltkräfte dadurch zu realisieren, dass mehr und mehr Synchronisationskonen verwendet werden. Statt zwei oder drei Synchronisationskonen bei einem ersten oder zweiten Gang eines Kraftfahrzeughandschaltgetriebes verwenden zu müssen, kann eine Synchronisationseinheit nach der vorliegenden Erfindung mit einem vollservofähigen Druckstück nur mit einem Konus auskommen. Vorteilhaft ist ein leichtes, einfach zu fertigendes Druckstück, wie zum Beispiel ein mehrfach umgeformtes Blechstück. Anhand der Geometrien und der Winkel werden die Servowirkung, die notwendige Schaltkraft und das zu nutzende Drehmoment eingestellt. Durch die gewählten geometrischen Abschnitte an dem Synchronisationsdruckstück und den Übergängen zwischen dem Synchronisationsdruckstück und den an ihm angelagerten bzw. in Berührung stehenden Bauteilen, wird je nach Wahl die Sperrsicherheit, der Verstärkungsfaktor und die Selbsthemmungssicherheit eingestellt. So kann eine geometrische Paarung gewählt werden, durch die die Sperrsicherheit im gleichen Maße wie der Servoverstärkungsfaktor steigt.

Die Entsperrkraft für den Teil des Stiftes, der in der unten liegenden Nut der Schiebemuffe, also auf der Innenseite der Schiebemuffe vorhandenen Nut, eingeführt ist, ergibt sich aus der Schaltkraft in Abhängigkeit der Anlagefläche, die über einen Berührwinkel einstellbar ist. Die Servoverstärkung ergibt sich aus der Servokraft zuzüglich der Schaltkraft, und bildet ein Verhältnis zur Schaltkraft, wobei solche Faktoren wie der Konusradius, der Reibkoeffizient, die Anzahl der Reibflächen, der Radius des Keilkontaktes und der Öffnungswinkel des Außensynchronrings in das Verhältnis Eingang finden. Eine ausreichende Sperrsicherheit (S > 1) ist dann gegeben, wenn die auf das Druckstück wirkenden Kräfte, die von der Mitte der Welle nach außen an dem Druckstück wirken, größer sind als die Krafteinwirkung in die entgegengesetzte Richtung, d. h. von außen, also von oben, auf das Druckstück, so dass es keine nach unten gerichtete Ausweichbewegung durchführen kann. Die Sperrsicherheit steht in direkter Abhängigkeit des Verstärkungsfaktors. Der Verstärkungsfaktor wird so eingestellt, dass das Reibmoment und das Servomoment nahezu oder tatsächlich identisch sind. Das Servomoment ist proportional zur Tangentialkraft des Radius der Servobewegung. Der Verstärkungsfaktor lässt sich über den Kontaktwinkel einstellen. In dem Verstärkungsfaktor geht direkt proportional der Radius der Servoschräge und der gewählte Konuswinkel ein. Ebenfalls muss beim Verstärkungsfaktor die Reibflächenanzahl und der Reibkoeffizient, durch das Reibmaterial hervorgerufen, erhöhend (weil im Nenner zu berücksichtigen) berücksichtigt werden. Die Selbsthemmungssicherheit ergibt sich aus den geometrischen Verhältnissen des Radius der Servoschräge zum Konusradius, wobei trigonometrische Faktoren der Reibung des Kontaktwinkels und des Konuswinkels in die Selbsthemmungssicherheit Eingang finden. Das Verhältnis wird so eingestellt, dass keine Synchronisation von selbst (SS > 1) auftreten kann. In das Reibmoment geht sowohl die Schaltkraft als auch die Servokraft ein. Weitere Faktoren des Reibmomentes sind der Konusradius und die Eigenschaft der Koni als auch der Konuswinkel. Durch die Wahl der Berührungsschrägen, der Berührungsflächen und des Reibkoeffizienten lassen sich die Tangential- und Vertikalkräfte zwischen Außensynchronring, Druckstück und Schaltmuffe mit Nut durch den Konstrukteur einer erfindungsgemäßen Getriebesynchronisation beliebig einstellen, wobei bei der geometrischen Paarung das Drehmoment der Synchronisationseinheit vorteilhaft genutzt wird.

Somit lässt sich durch vorliegende Erfindung der Schaltkomfort während der Synchronisation erhöhen, während die zu verwendenden Teile leicht zu fertigen und leicht zu montieren sind. Es entfallen zum Beispiel Zahnkränze innerhalb der Synchronisierung. Auch mit weniger Kraft, wobei weniger Haken im Getriebe auftritt, lassen sich große Drehmomente über eine erfindungsgemäße Synchronisation übertragen.

Die vorliegende Erfindung kann noch besser verstanden werden, wenn Bezug auf die folgenden Figuren genommen wird, wobei
Figur 1 ein erstes Ausführungsbeispiel eines erfindungsgemäßen Druckstücks zeigt,
die Figuren 2 und 3 ein alternatives Ausführungsbeispiel eines erfindungsgemäßen Druckstückes zeigen,
Figur 4 den Eingriff eines Druckstücks in den Synchronring zeigt,
Figur 5 eine alternative Ausgestaltung eines erfindungsgemäßen Druckstücks als Blechstück zeigt,
Figur 6 ein als Voll-Servodruckstück funktionierendes alternatives Druckstück zeigt,
Figur 7 eine weitere Alternative eines erfindungsgemäßen Druckstücks mit einem verstärkten Entsperrwinkel zeigt,
Figur 8 eine mögliche Umsetzung eines Druckstücks nach Figur 7 zeigt,
die Figuren 9 bis 11 eine weitere Alternative eines erfindungsgemäßen Druckstücks aus unterschiedlichen Perspektiven zeigen,
Figuren 12 bis 14 eine weitere Alternative eines erfindungsgemäßen Druckstücks aus unterschiedlichen Perspektiven zeigen,
die Figuren 15 und 16 ein eingebautes Druckstück unterhalb einer Schiebemuffe zeigen,
Figur 17 ein eingebautes Druckstück unterhalb einer Schaltmuffe zeigt,
Figur 18 ein eingeschwenktes Druckstück im Betrieb zeigt,
Figur 19 eine weitere Eingriffsgestaltung in einen Synchronring zeigt,
Figur 20 einen weiteren Eingriff in einem Synchronring zeigt,
Figur 21 einen weiteren Eingriff in einen Synchronring zeigt,
Figur 22 ein verbautes Druckstück in einer geschnitten Synchronisationseinheit zeigt,
Figur 23 ein ballig ausgeführtes Druckstück zeigt,
Figur 24 eine Alternative eines weiteren ballig ausgeführten Druckstückes zeigt,
Figur 25 ein ballig ausgeführtes Druckstück im eingebauten Zustand zeigt,
Figur 26 die ballige Berührungsstelle zwischen Druckstück und einem Synchronring zeigt,
Figur 27 ein Druckstück mit Rastierelement zeigt,
Figur 28 ein eingeschwenktes Druckstück nach Figur 27 zeigt,
Figur 29 ein eingebautes Druckstück mit Rastierelement zeigt,
Figur 30 ein längsbewegliches Druckstück mit Rastierelement zeigt,
die Figuren 31 bis 34 ein erfindungsgemäßes Druckstück in der Neutralstellung aus unterschiedlichen Blickwinkeln zeigen,
die Figuren 35 bis 38 ein erfindungsgemäßes Druckstück in der Sperrphase zeigen, und
Figur 39 den Aufbau in 3D-Darstellung mit mehreren erfindungsgemäßen Druckstücken zeigt.

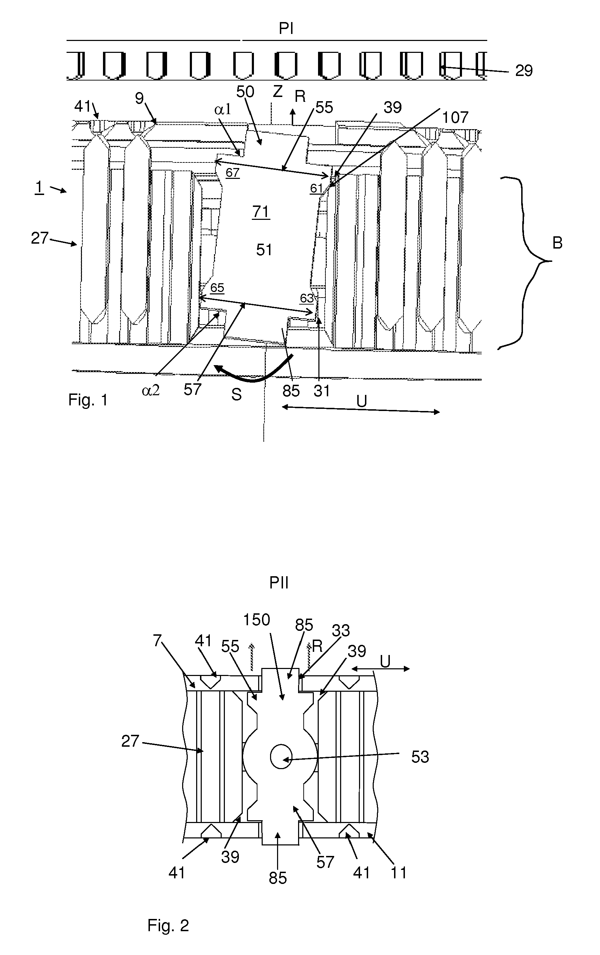

Figur 1 stellt ein erfindungsgemäßes Druckstück 50 in Schwenkbewegung in der Synchronnabe 27 dar, wobei die einzelnen Konturen des Druckstückes soweit reduziert worden sind, dass besonders bemerkenswerte Bereiche 61, 63, 65, 67 und 55, 57 deutlicher hervortreten können. Bekannterweise ist eine Getriebesynchronisation 1 nach einer üblichen Ausgestaltung mit einem Losrad 29, einem ersten Außensynchronisationsring 9 mit entsprechend vielen Sperrverzahnungen 41 und einer Welle 31 aufgebaut. Die Synchronisationseinheit 1 stellt dabei sicher, dass ein Gleichlauf zwischen Losrad 29 und Welle 31 nach dem Einsynchronisieren erwirkt wird. Der Synchronisationsvorgang erfolgt unter Zuhilfenahme eines Druckstücks 50. Das Druckstück 50, das auch mehrfach über den Umfang in Umlaufrichtung U der Synchronisationseinheit einer Getriebesynchronisation 1 vorhanden sein kann, ist in einer Ausnehmung 39 der Synchronnabe 27 so platziert, dass es schwenkbewegliche Anlagerungen mit einer Seite in einem Eckbereich 61, 63, 65, 67 durchführen kann. Die Schwenkbewegung S erfolgt durch ein horizontales Abwinkeln in der Umlaufrichtung U der Synchronnabe 27. Zum Abwinkeln und Anlagern des Druckstücks 50 im Bereich der Ausnehmung 39 an der Synchronnabe 27 ist das Druckstück 50 mit einer geeigneten Lagerung 51 im mittleren Bereich 71 versehen. Die Lagerung 51 im mittleren Bereich 71 des Druckstücks 50 kann zum Beispiel eine punktförmige Lagerung sein, so dass ein jeweiliger Eckbereich 61, 63, 65, 67, wobei die Eckbereiche quadratisch auf dem Druckstück verteilt sind, in Anlagerung an eine jeweilige Ausnehmung 39 der Nabe 27 bringbar ist, um eine Sperrphase PI durchzuführen. Das Druckstück 50 weist deswegen wenigstens eine Synchro-Servo-Schräge 107 auf, die auch in allen Eckbereichen 61, 63, 65, 67, also viermal, vorhanden sein kann. Das Druckstück 50 sieht blockartig aus. Das Druckstück 50 weist einen zusammenhängenden Bereich auf. Das Druckstück 50 ist in seinem mittleren Bereich 71 taillierter als in den sich aufweitenden Bereichen, dort, wo die Eckbereiche 61, 63, 65, 67 vorhanden sind. Die Eckbereiche 61, 63, 65, 67 schaffen Querstrecken 55, 57, die in einem nahezu rechten Winkel α1, α2 zur Längsachse des Druckstücks 50 stehen. Der Rumpfbereich des Druckstücks endet somit im Bereich der Synchro-Servo-Schräge 107, das Druckstück 50 kann fortgesetzt werden. Das Druckstück 50 hat in seinem Rumpfbereich eine I-Form. Das Druckstück 50, das nach einer Ausgestaltung flächig und in seitlicher Betrachtung schmal aufgebaut ist, kann weiterführende Nasen 85 haben. Im Bereich der Mitte 71 und im Bereich der Nase 85 ist das Druckstück 50 schmaler als im Bereich der ersten oder zweiten Querstrecke 55, 57. Von der Mitte aus startend, dort, wo sich ungefähr die Lagerung 51 des Druckstücks 50 befindet, weist das Druckstück 50 zwei parallele Seiten auf, die durch Schrägen 107 im Endbereich des Rumpfes auseinander laufen, um die Querstrecken 55, 57 zu bilden. Das Druckstück 50 hat eine solche Länge, dass die Nasen 85 über die Breite B der Synchronnabe 27 hinaus ragen. Die Getriebesynchronisation 1 weist eine Abtriebsrichtung R auf. In einer Neutralstellung fällt die Zentralachse des Druckstücks mit der Abtriebsrichtung R in paralleler Richtung zusammen. Während der dargestellten Sperrphase PI schwenkt das Druckstück 50 über die Schwenkbewegung S aus dieser Richtung aus und die Zentralachse Z wird verlassen. Das Druckstück 50 berührt in diesem Falle über die Synchro-Servo-Schräge 107 die Synchronnabe 27. Das Druckstück 50 kann somit in seiner Ausnehmung durch eine in der Umlaufrichtung der Antriebswelle folgenden Schwenkbewegung das Drehmoment aus der Rotationsbewegung des Getriebes vorteilhaft verstärkend beim Ansynchronisieren von der Synchro-Servo-Schräge 107 auf eine Extremität 85 umsetzend nutzen.

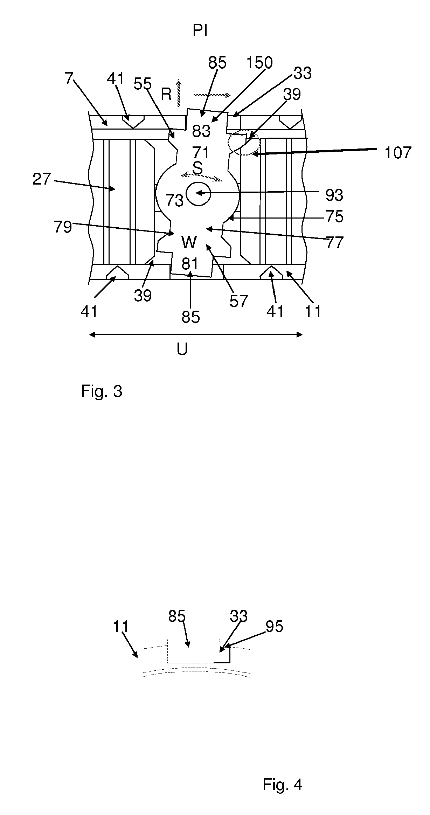

Die Figuren 2 und 3 zeigen eine alternative Ausführungsform eines im Wesentlichen I-förmigen Druckstücks 150, einmal in der Sperrphase PI gemäß Figur 3 und einmal in der Neutralstellung PII nach Figur 2. Beiderends des Druckstücks 150 sind die Endbereiche 81, 83 durch Nasen 85 abgeschlossen. Zwischen den Endbereichen 81, 83 befindet sich der mittlere Bereich 71, der aber nicht den gesamten Bereich des Druckstücks 150 ausfüllt, sondern zwischen den Nasen 85 und dem mittleren Bereich 71 sind noch die erste und zweite Querstrecke 55, 57 vorgesehen. Im mittleren Bereich 71 gibt es ein mittleres Teil 73, das zylinderförmig bzw. um einen Momentanpol 93 herum als Lagerbereich für das Druckstück 150 angeordnet ist. Das Druckstück weist somit einen inneren Bereich 77 und einen äußeren Bereich 75 auf. Wird die Oberfläche im äußeren Bereich 75 abgefahren, so gibt es eine Kreisform, an die sich eine Kreuzform anschließt. Das Druckstück sieht somit wie ein Doppelkreuz mit unterlegtem Zylinder aus. Das Druckstück 150 ist in der Synchronnabe 27 platziert. Aufgrund seiner Lagerung im Bereich der Momentanpols 93 kann das Äußere des Druckstücks 150, die Außenseite 75, in die Ausnehmung 39 der Synchronnabe 27 eingreifen. Durch die Anlage des Synchronstücks 150 mit einer seiner Schrägen bildet sich die Synchro-Servo-Schräge 107, die besonders gut in der Sperrphase PI zu sehen ist. Wie durch die Pfeile dargestellt, bewegt sich durch die Schwenkbewegung S das Druckstück 150 aus seiner Abtriebsrichtung R, die mit der Wellenabtriebsrichtung übereinstimmt, seitlich, in Umlaufrichtung U heraus, und schafft so die Anlage mit Servowirkung in eine Richtung. Die Lagerung des Druckstücks erlaubt es neben einer Schwenkbewegung S eine radiale Bewegung W durchzuführen. Die Synchronringe 7, 11 weisen wenigstens eine Ausnehmung 33 auf, in die eine Nase 85 eingreifen kann. Wie üblich sind die Synchronringe 7, 11 mit Sperrverzahnungen 41 ausgestattet. Unterhalb des Momentanpols 93 kann zur Lagerung ein Lagerungsstift 53 von der Wellenmitte weggerichtet nach außen weisen, auf dem das Druckstück 150 dreh-, schwenk- und radialbeweglich lagert. Die Ausnehmung 39 ist zum ersten Synchronring 7 und zum zweiten Synchronring 11 bei einer Doppelsynchronisierung vorhanden. Das Druckstück 150 pendelt aufgrund des Drehmomentes und des Synchronvorganges zwischen der Sperrphase PI und der Neutralstellung PII drehbeweglich hin und her, wobei zwischen einer parallelen Stellung zur Abtriebsrichtung R und einer ausgelenkten Stellung gewechselt werden kann.

In Figur 4 ist zu sehen, wie die Nase 85 in eine der Ausnehmungen 33, zum Beispiel des zweiten Synchronrings 11, eingreifen kann, und dabei einen gewissen Abstand 95 zu einer Seite der, in seinen absoluten Abmessungen betrachtete, Synchronringausnehmung wahrt. Es wird ein Abstand zu der Seite gewahrt, der von der Seite der genutzten Servo-Synchro-Schräge 107 (nicht dargestellt) entfernter steht.

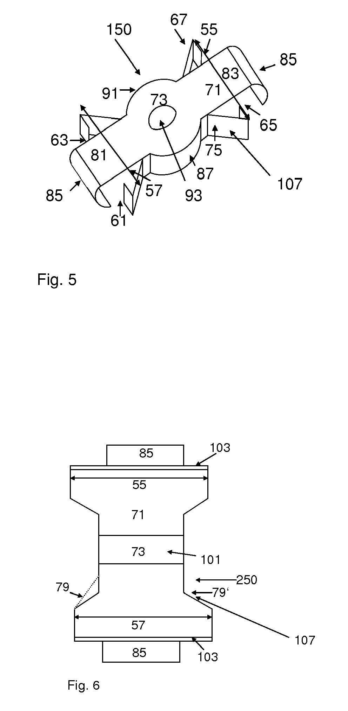

In der Figur 5 ist das in den Figuren 2 und 3 von oben dargestellte Druckstück 150 als Blechausführung alleinstehend dargestellt, es ist ein zusammenhängendes Blechteil, das durch mehrfaches Biegen, Umbördeln oder Umkanten, je nach durchgeführten Herstellprozess, seine endgültige Form erlangt hat. Von der Oberfläche her betrachtet weist das Druckstück 150 zwei parallele Längskanten 91 auf, die im Bereich des Momentanpols 93 bauchartig auseinander laufen. Der Momentanpol 93 befindet sich im mittleren Teil 73 des Druckstücks 150. Im Bereich der Endbereiche 81, 83 ist das Blech bauchig umgebogen, um die Nasen 85 zu bilden. Die Eckbereiche 61, 63, 65, 67 sind durch starkes Abkanten unterhalb der Kante 91 so gebildet, dass das Äußere 75 des Druckstücks 150 die Synchro-Servo-Schräge 107 jeweils an der seitlichen Oberfläche aufweist. Die Synchro-Servo-Schräge 107 endet an der breitesten Stelle der Querstrecke 55, 57, an denen die Seiten nach innen abgewinkelt umgeklappt sind. Von den Nasen 85 abgesehen weist das Druckstück 150 also zwei Seitenwände auf, von denen in der Figur 5 die erste Seitenwand unterhalb der Kante 91 zu sehen ist. Das Druckstück 150 ist insgesamt flach. Das Druckstück 150 ist unterhalb der Oberfläche hohl. Das Druckstück 150 hat vier seitlich, abgewinkelte, schräg hinausgehende Arme, die auch wie Ohren aussehen können, deren Schrägen mit den Synchro-Servo-Schrägen übereinstimmen.

Ein weiteres erfindungsgemäßes Druckstück 250 ist in Figur 6 dargestellt, das auf den Innenseiten 79, 79' der Querstrecken 55, 57 die Schrägen für die Synchro-Servo-Schräge 107 aufweist. Die Schräge 79' ist eine mehrfach verwinkelte Schräge, so dass die einzelnen Schrägen sich überlagern. Eine Schrägenrichtung erstreckt sich von dem mittleren Teil auf die Querstrecke. Eine Schrägenrichtung erstreckt sich von der Oberfläche auf die Unterfläche.

Somit ist die Schräge 79' nicht nur eine Ebene im Raum mit nur einem Raumwinkel gegenüber dem I-Druckstück, sondern mit zwei Raumwinkeln. Der Grundriss des Druckstücks 250 ist wiederum schmetterlingsartig mit zwei Nasen 85, wie die Druckstücke 50 der Figur 1 bzw. 150 der Figuren 2 und 3. Das Druckstück nach Figur 6 unterscheidet sich von dem zuvor dargestellten Druckstück 150 in seinem mittleren Bereich 71, in dem ein mittleres Teil 73 als Muffenbetätigungselement, insbesondere in der Form eines Querelementes 101, aus der Oberfläche des Druckstücks 250 herausragt. Weiterhin ist eine Reibungsneutralisatorfläche 103 in Richtung auf die Nasen 85 bzw. am Ende des Rumpfbereiches, dort wo die Querstrecken 55, 57 verlaufen, vorgesehen. Das Druckstück nach Figur 6 weist somit vier Synchro-Servo-Schrägen an seinen Außenbereichen 75 auf der Innenseite 79, 79' und daneben zwei weitere Schrägen als Reibungsneutralisatorflächen 103 auf.

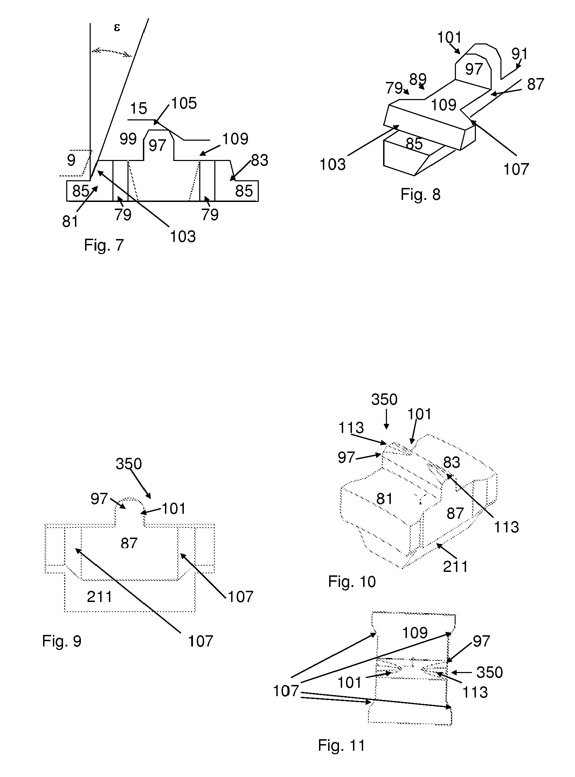

Die Funktionsweise der Reibungsneutralisatorfläche 103 lässt sich leichter aus den Figuren 7 und 8 verstehen. Der Reibungsneutralisator weist einen Winkel ε, einen Sperrwinkel, auf, der mit dem Winkel des Außensynchronisationsrings 9 im Bereich seiner Ausnehmung übereinstimmt. Der Winkel ε wird von der Senkrechten, die vorzugsweise im rechten Winkel zur Nase 85 steht, abgetragen. Der Winkel ε kann durch den Synchronisationsdruckstückentwickler nach den oben aufgeführten mathematischen Beziehungen frei eingestellt werden. Der Winkel ε steht im rechten Winkel zur Oberfläche 109 des Druckstücks, aus dem die Mittenerhöhung 97 hinausragt. Die Mittenerhöhung 97 ist für den Nuteneingriff 99 in die Schiebemuffennut 105 der Schiebemuffe 15 bestimmt, um ein Muffenbetätigungselement zu bilden. Sowohl auf der ersten Seitenwand 87 als auch auf der zweiten Seitenwand 89 des Druckstücks befindet sich jeweils wenigstens eine Synchro-Servo-Schräge 107, die auf der Innenseite 79 der Querstrecke durch die Kante 91 begrenzt angeordnet ist. Die Endbereiche 81, 83 haben also eine viel- oder mehrschichtige Gestalt, sie sind mit unterschiedlichen Schrägen, der Sperrwinkelschräge durch den Sperrwinkel ε und der Synchro-Servo-Schräge 107 auf längs- und querverlaufenden Abschnitten ausgestattet. Das Druckstück sieht wie mehrfach überlagerte verkürzte Stäbe aus, aus dessen obersten Stab ein Griffelement für die Schiebemuffennut 105 als Muffenbetätigungselement 101 herausragt.

Eine weitere Ausgestaltung eines erfindungsgemäßen Druckstücks ist in den Figuren 9 bis 11 zu sehen. Figur 9 ist eine Seitenansicht. Figur 10 ist eine räumliche Ansicht von schräg oben auf das Druckstück und Figur 11 zeigt das Druckstück von oben. Das Druckstück 350 wirkt massiver aufgrund seines Fußes 211, der trapezartig über die Länge des Druckstücks abzüglich der äußeren Abschnitte der Endbereiche 81, 83 ausgestaltet ist. Die Form des Fußes 211 erlaubt eine kipp- oder schwenkbewegliche Seitenbewegung des Druckstücks bei gleichzeitig fester Lagerung. Aus der Oberfläche 109 des Druckstücks reicht eine Mittenerhöhung 97 hervor, die an ihren zu den Seitenflächen 87, 89 hinweisenden Abschnitte Kippschrägen 113 aufweist. Die Mittenerhöhung 97 dient als Muffenbetätigungselement 101. Beabstandet von der Mittenerhöhung 97 in Richtung auf die Randbereiche bzw. Endbereiche 81, 83 weisen die Synchro-Servo-Schrägen 107 vom schmaleren inneren Teil des Druckstücks 350 nach außen, um die Querstrecken zu bilden. Die Seitenwände 87, 89 (89 ist nicht zu sehen) sind zusammenhängende Wände mit randlings angeordneten Schrägen für die Synchro-Servo-Schräge 107. Zum Abkippen des Druckstücks ist der Druckstückfuß 211 ebenfalls schräg verlaufend. Der Fuß 211 fächert in Richtung auf die Mittenerhöhung 97 auf.

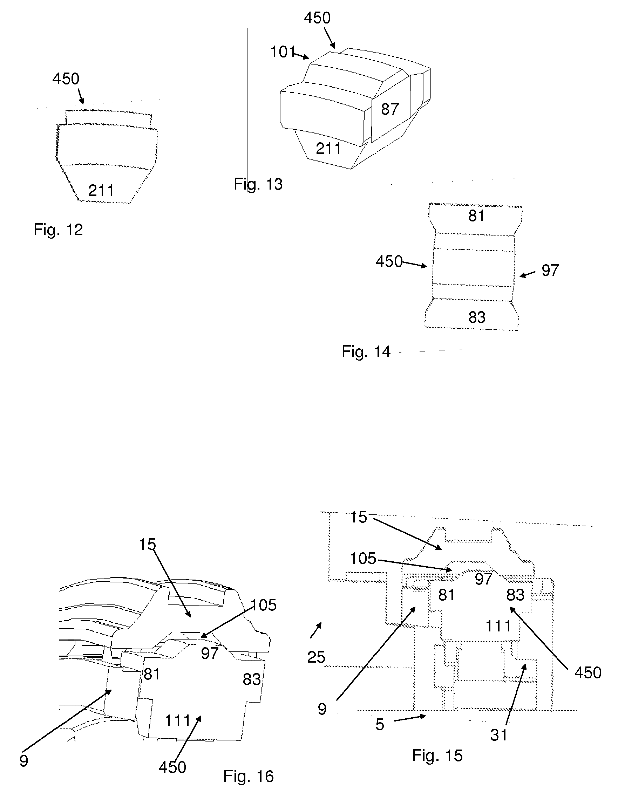

Eine weitere Gestaltung eines erfindungsgemäßen Druckstücks 450 ist den Figuren 12, 13, 14 zu entnehmen. Das Muffenbetätigungselement 101 in Form einer Mittenerhöhung 97 weist nur Schrägen zu den jeweiligen Endbereichen des Druckstücks 450 auf. Die Seitenwand 87 erstreckt sich von dem Muffenbetätigungselement 101 bis zum schräg zulaufenden Druckstückfuß 211. Die Mittenerhöhung 97 ragt als - zum Druckstück 450 quer verlaufende - niedrige Erhöhung zwischen den Endbereichen 81, 83 vom Druckstückfuß 211 weg.

In den Figuren 15 und 16 kann gesehen werden, wie ein Druckstück 450, das mit einem Druckstückfuß 111 im unteren Teil, an der auf die Antriebswelle 5 hinweisenden Seite im eingebauten Zustand unterhalb einer Schiebemuffe, ausgestattet ist, aussieht. Die Umrisse des Druckstücks 450 sind dargestellt. Die exakten Schrägen des Druckstückfußes 111 und der Mittenerhöhung 97 sind nur angedeutet. Die Winkel der Schrägen bzw. die exakte Ausgestaltung der Oberfläche der Synchro-Servo-Schräge 107 (nicht dargestellt), der Mittenerhöhung 97 und der Oberfläche des Druckstückfußes 311 obliegt dem Konstrukteur, indem er die Betätigungswinkel, zum Beispiel den Sperrwinkel ε oder den Winkel der Synchro-Servo-Schräge einstellt, ohne über das Maß der vorliegenden Erfindung hinaus erfinderisch tätig werden zu müssen. An dem Druckstück 450 im Bereich einer der beiden Endbereiche 81, 83 schließt sich der Außensynchronisationsring 9 an, der, wie üblich, mit einem Kupplungskörper 25 durch eine Synchronisationsschräge den gegenseitigen Synchronisationsbremsvorgang durchführen kann. Das Druckstück 450 liegt oberhalb der Getriebewelle 31. An der höchsten Stelle des Druckstücks 450 ist die Mittenerhöhung 97, die in die Schiebemuffe 15 anstelle der Schiebemuffennut 105 eingreift. Durch den Eingriff kann der Außensynchronisationsring 9 (bzw. jeder beliebige Synchronisationsring) durch Nutzung des Drehmomentes ausgerichtet werden. Wie aus den Figuren 15 und 16 zu entnehmen ist, zeichnet sich die vorliegende Erfindung unter Anderem dadurch aus, dass auf die Verzahnung des Synchronringes verzichtet werden kann. Trotzdem ist mit einem verzahnungsfreien Synchronring eine effektive Synchronisierung möglich.

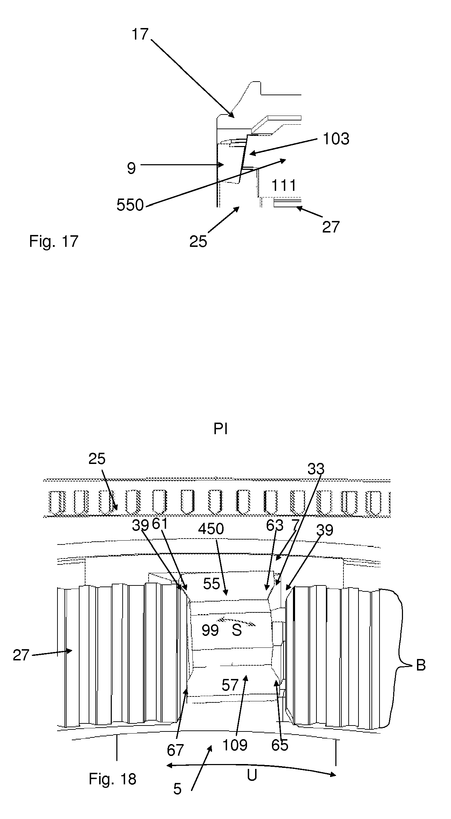

In Figur 17 ist ein weiteres Druckstück 550 dargestellt, das mit einer Schaltmuffe 17 einen Synchronring 9 als Außensynchronisationsring und einem Kupplungskörper 25 in einer Synchronnabe 27 zusammenwirken kann. Oberhalb des Druckstückfußes 11 im Bereich eines Endes ist eine Reibungsneutralisatorfläche eines Reibungsneutralisators 103 vorgesehen, dessen Schräge auf die Schräge des Außensynchronisationsrings abgestimmt ist. Der Außensynchronisationsring hat eine Schräg dort, wo er in Berührung mit dem Druckstück 550 geraten kann. Der Reibungsneutralisator 103 ist mit einem identischen Winkel in umgekehrter Richtung wie der Synchronisationsring 9 ausgestattet.

In Figur 18 ist ein erfindungsgemäßes Druckstück 450 in der Sperrphase PI zwischen der Synchronnabe 27, auf der Antriebswelle 5 sitzend, dargestellt. Der Kupplungskörper 25 weist Verzahnungen auf. Jedoch muss der Synchronring 7 nach dem Ausführungsbeispiel der Figur 18 keine Verzahnungen mehr haben. Dort, wo der Nuteneingriff 99 endet, gehen die Eckbereiche 61, 63, 65, 67 nach außen auseinander, um eine erste und zweite Querstrecke 55, 57 zu bilden. Die Schrägen an den Seitenflächen des Druckstücks 450 sind auf die Ausnehmung 39 der Synchronnabe 27 abgestimmt, die Ausnehmung 39 kann beiderseits der Synchronnabe, beiderseits des Druckstücks 450 vorgehalten werden. Der Synchronring 7 weist wenigstens eine Ausnehmung 33 aus, in die das Druckstück 450 einfahren kann. Das Druckstück ist so gelagert, dass es eine Schwenkbewegung S in Umlaufrichtung U durchführen kann, wobei auf der Oberfläche 109 des Druckstück 450 die Breite B der Synchronnabe 27 so abgestimmt ist, dass das Druckstück 450 über die Breite B hinausragend in die Ausnehmung 33 des Synchronrings 7 eingreifen kann.

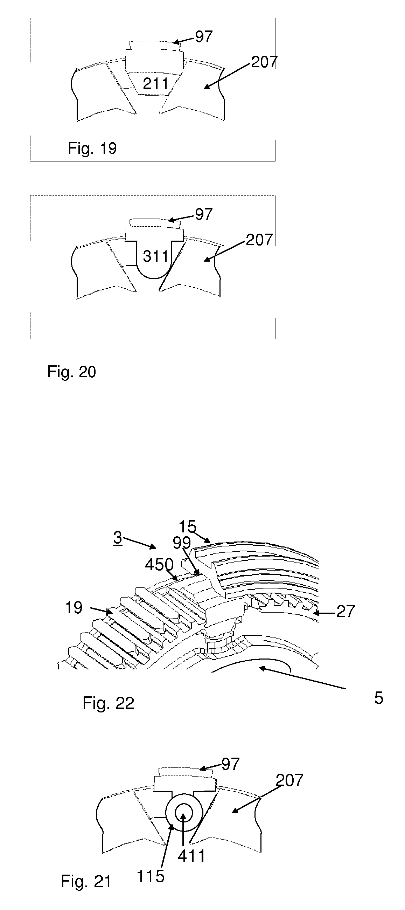

In den Figuren 19, 20, 21 werden unterschiedliche Eingriffe eines Druckstücks für den Eingriff zwischen dem Synchronring 207 dargestellt. Auch ist der Druckstückfuß 211, 311 unterschiedlich ausgeführt, wichtig bei einem solchen kompakten, länglichen Druckstück mit Mittenerhöhung 97 ist eine solche Anordnung, dass das Druckstück schwenkbeweglich gelagert ist. Daher ist der Druckstückfuß 311 halbrund ausgestaltet. Der Druckstückfuß 211 ist trapezförmig Eine weitere Möglichkeit des Druckstückfußes besteht in einer runden abrollbaren, zum Beispiel nagelgelagerten Rolleneingriffsmöglichkeit 411 zwischen dem Synchronring 207. Die Rolle 115 nach Figur 21 ist am Ende des Druckstückfußes 411 angeordnet. Die Rolle kann in der Ausnehmung des Synchronringes eingreifen und dort abrollen.

In Figur 22 ist eine erfindungsgemäße Synchronisationseinheit dargestellt, die oberhalb einer Antriebswelle 5 mit ihrer Synchronnabe 27 und dem dort dazwischen angeordneten Synchronisationsdruckstück 450 unterhalb einer Schiebemuffe 15 platziert ist. Die Schiebemuffe 15 ist mit einer Muffeninnenverzahnung 19 ausgestattet, damit sie in der Synchronnabe laufen kann. Ein Nuteneingriff 99 ist ungefähr in der Mitte des Druckstücks 450 angeordnet, damit er die Schiebemuffe 15 untergreifen kann. Die Schiebemuffennut ist auf die Lage der Druckstückerhöhung abgestimmt.

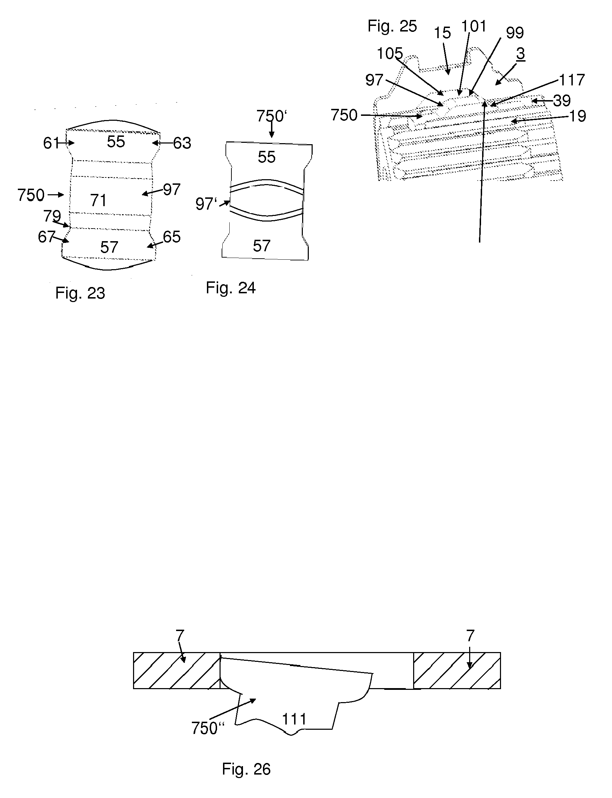

In Figur 23 ist ein erfindungsgemäßes Druckstück 750 dargestellt, das in der Figur 24 als Druckstück 750' leicht variiert dargestellt ist. Anstelle von geraden Kanten sind ballig arrangierte Oberflächen an Kontaktstellen zum besseren Einrollen vorgesehen. Das Berührverhalten wird hierdurch gesteigert, jedoch ist der Fertigungsaufwand des Druckstücks gesteigert. Die Eckbereiche 61, 63, 65, 67 des Druckstücks 750 nach Figur 23 sind oberhalb der jeweiligen Querstrecke 55, 57 ballig abgeschlossen, während sie auf der Innenseite 79 ihre schon zuvor dargestellte Synchro-Servo-Schräge aufweisen. Die Mittenerhöhung 97 kann entweder mit parallelen Kanten im mittleren Bereich 71 (Figur 23) realisiert werden oder mit ballig ausgeführten Mittenerhöhungskanten 97' (Figur 24).

Wie ein Druckstück 750 nach Figur 23 zu verbauen ist, ist der Figur 25 zu entnehmen. Die Figur 25 zeigt den oberen Bereich mit Schiebemuffe 15 und Muffeninnenverzahnung 19. Die Nabe weist eine Ausnehmung 39, vorzugsweise mehrere Ausnehmungen 39, auf, in die das Druckstück 750 einkanten kann. Die Schiebemuffe 15 ist mit einer unten liegenden, auf der Innenseite vorgesehenen, Schiebemuffennut 105 ausgestattet, in die die Mittenerhöhung 97 als Nuteneingriff 99 eingreifen kann, damit das Druckstück 750 als Muffenbetätigungselement unter Anderem eine Ausrichtung der drehenden Teile durchführen kann. Die Mittenerhöhung 97 ist ballig ausgestaltet, so dass sie einen Ballenrand 117 an der Oberfläche zeigt. Figur 25 zeigt einen Teil der Servosynchronisationseinheit 3, die aus einem Gerät zur Getriebesynchronisation eine Voll-Servosynchronisierungseinheit schaffen kann.

Wie in Figur 26 dargestellt, können bei einem Druckstück 750" auch weitere Oberflächen ballig ausgeführt werden, so zum Beispiel die Fläche des Stücks 111, die mit dem Synchronring 7 in Eingriff stehen soll. Das Druckstück 750" ist in seiner Breite schmaler als die für ihn vorgesehene Ausnehmung in dem Synchronring 7.

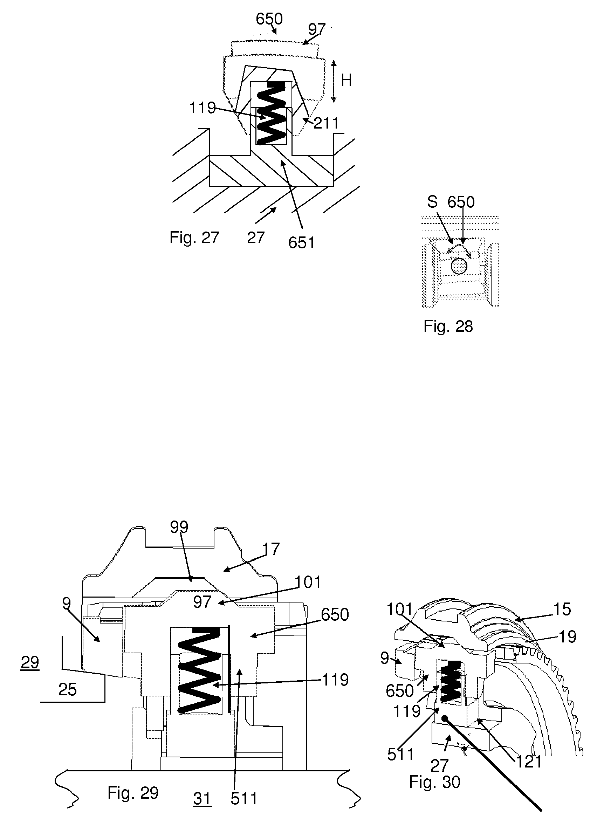

Die zuvor dargestellten Druckstücke können zur Erzeugung einer weiteren Bewegungsrichtung mit einer Rastierfeder 119 zur Erleichterung einer Hubbewegung H wie in Figur 27 dargestellt ausgestattet werden, um zu einem Druckstück nach 650 zu gelangen. Die Rastierfeder 119 befindet sich unterhalb der Mittenerhöhung 97 auf der Unterseite. Die Rastierfeder weist in die entgegengesetzte Richtung zur Mittenerhöhung 97. Die Rastierfeder 119 befindet sich in einer kolbenartigen Umschließung im Bereich des Druckstückfußes 211. Die Rastierfeder erleichtert je nach Auslegung ebenfalls die Schwenkbewegung S des Druckstücks 650, so wie in Figur 28 dargestellt. Die Rastierfeder 119 stellt eine Verbindung zwischen Druckstück 650 und Lagerung der Rastierung her. Die Rastierlagerung 651 des Druckstücks 650 liegt in der Synchronnabe 27.

Zur Verständnisförderung ist die prinzipielle Darstellung aus Figur 27 in den Figuren 29 und 30 auf zuvor dargestellte Einbauvarianten umgesetzt worden. Die Schaltmuffe 17 (Figur 29) kann als Schiebemuffe 15 ausgestaltet sein. Ein Außensynchronisationsring 9 kann über einen Kupplungskörper 25 die Synchronisierung zu einem Losrad 29 von einer Getriebewelle 31 unter Nutzung des Druckstücks 650 herstellen. Die Rastierfeder 119 drückt das Druckstück mit seiner Mittenerhöhung 97, die als Muffenbetätigungselement in Querrichtung arbeitet, in den Nuteneingriff 99 der Schaltmuffe. Wird die Schaltmuffe bewegt, so kann durch die federnde, ausweichende Lagerung des Druckstücks 650, zum Beispiel durch die Rastierfeder 119, das Druckstück eine Ausweichbewegung durchführen. Bei einer Schiebemuffe 15 nach Figur 30 sind vorteilhaft Muffeninnenverzahnungen 19 vorgehalten. Das Druckstück 650 nach Figur 30 liegt in einer Schieberille 121, um längsbewegliche Ausgleichsbewegungen auf den Außensynchronisationsring 9 hin und von dem Außensynchronisationsring 9 weg durchführen zu können. Der Druckstückfuß 511 des Druckstücks 611 ist zweigeteilt ausgeführt. Zwischen seinen Teilen liegt die Rastierfeder 119. Der Druckstückfuß kann in der Synchronnabe 27 laufen. Das Muffenbetätigungselement 101 untergreift die Schiebemuffe 15 in der Muffennut.

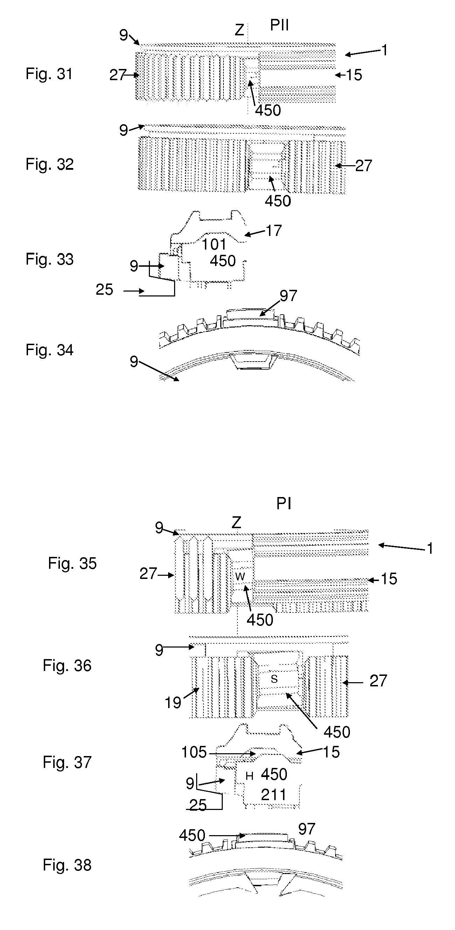

Zur weiteren Förderung des Verständnisses wird auf die Figuren 31 bis 34 verwiesen, die das Synchronisationsdruckstück 450 aus verschiedenen Perspektiven in einer Neutralstellung PII zeigen, und auf die Figuren 35 bis 38, die das Synchronisationsdruckstück 450 in einer abgewinkelten Stellung, einer Sperrstellung der Sperrphase PI darstellen. Die Getriebesynchronisation 1, zu sehen in den Figuren 31 und 35, umfasst unter Anderem eine Schiebemuffe 15 und einen Außensynchronisationsring 9. Ein wichtiges Element ist das Druckstück, zum Beispiel in der Ausgestaltung der Figur 33. Anstelle einer Schiebemuffe kann auch eine Schaltmuffe 17 (Figur 33) benutzt werden. Die Stellungen PI und PII zeichnen sich durch die Abweichung des Druckstücks 450 von der Zentralachse Z auf der einen Seite und alternativ durch die durchgeführte Hubbewegung H voneinander aus.

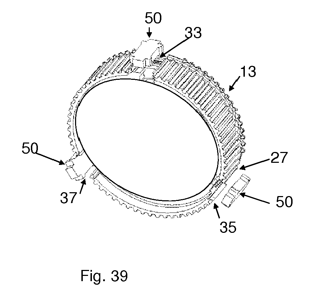

Die Figur 39 zeigt, wie drei Druckstücke 50 in einer Nabe 27 angeordnet werden können. Vorteilhaft werden die Druckstücke 50 gleichmäßig über den Umfang verteilt, wenn mehrere gleichartige Druckstücke vorhanden sind. Der Abstand von einem Druckstück zum nächsten beträgt bei drei Druckstücken 120°. Jedes Druckstück 50 hat somit seine eigene Ausnehmung 33, 35, 37, in das es eingegesetzt ist, um mit einem Synchronring 13 zusammen zu wirken.

Dem Fachmann ist verständlich, dass ein erfindungsgemäßes Druckstück und eine erfindungsgemäße Synchronisationseinheit zahlreiche weitere Variationen aufweisen können, es steht im Belieben des Anwendungsentwicklers, die Oberflächen der prinzipiell dargestellten Strukturen des einfach zusammenhängenden Synchronisationsdruckstücks, ohne mehrfache Fingergestaltung in die gleiche Längsrichtung, ballig, schräg, abgewinkelt oder rund zu gestalten, um durch die sich ergebenden Anlageflächen zwischen Synchronisationsdruckstück und Berührungsfläche der Synchronnabe, des Synchronisationsrings und der Schiebemuffe vorteilhaft Momente und Kräfte in Getriebe verstärkend zu nutzen, damit der Fahrer eines Kraftfahrzeuges mit einem erfindungsgemäßen Getriebe beim Einlegen und Auslegen der Gänge kraftunterstützt leichter schalten kann. Das erfindungsgemäße Druckstück, als 1-Form oder auch nur mit einer zentralen Erhöhung zum Eingriff in die Schiebemuffe, steigert den Fahrkomfort durch leichteres Schalten und durch Verringerung des Risikos des Ratschens.

Wie zuvor schon ausgeführt, ist das Druckstück in weiten Teilen beliebig zu gestalten, nach einem hervorzuhebenden Aspekt werden Drehmomente von unterschiedlichen Quellen innerhalb der Synchronisationseinheit sowohl fürs Sperren als auch für das Entsperren während der Synchronisationsphase genutzt. In einer Ausführungsform wird ein zentraler Stift genutzt, der aber auch eine abgeteilte Form von dem übrigen Druckstück aufweisen kann. In einer weiteren Ausführungsform ist eine Mittenerhöhung vorgesehen. Die seitlichen Anlageflächen, die in den Ausführungsbeispielen eine I- oder Hammerform haben, sollten auf Anlagebereiche in der Nabe abgestimmt sein, so dass auch andere geeignete Formen vorstellbar sind. Durch den Wegfall von zusätzlichen Sperrverzahnungen, die bei einer erfindungsgemäßen Vollservosynchronisation häufig nicht mehr nötig sind, wird auch die Fertigung des Synchronisationsrings einfacher. Insbesondere ein leichtes, zum Beispiel aus Blech geformtes, Teil, das als Druckstück in einer Getriebesynchronisation genutzt wird, wobei die Getriebesynchronisation hohe Drehmomente übertragen kann, trägt zur breiten Akzeptanz der vorliegenden Erfindung bei Getriebeentwicklern bei.

Die Erfindung zeigt einen weiteren Vorteil in Bezug auf die Schiebenmuffenverzahnung. Der Winkel der Schiebenmuffenverzahnung, der so genannte "Dachwinkel", kann beliebig ausgelegt werden. Im Gegensatz zu üblichen Getriebesynchronisationen ist der mögliche Winkelbereich nicht eingeschränkt, um, wie sonst üblich, die Sperrsicherheit zu gewährleisten. Daher kann der Entwickler einer erfindungsgemäßen Getriebesynchronisation einen solchen Dachwinkel wählen, der zu einer möglichst reduzierten Einspurkraft führt.

### Bezugszeichenliste:

- B: Breite der Synchronnabe
- H: Hubbewegung
- R: Abtriebsrichtung
- U: Umlaufrichtung
- α1: Erster rechter Winkel
- α2: Zweiter rechter Winkel
- ε: Sperrwinkel
- E: Neutralisatorwinkel
- W: Radiale Bewegung
- S: Schwenkbewegung
- PI: Sperrphase
- PII: Neutralstellung
- Z: Zentralachse
- 1: Getriebesynchronisation
- 3: Synchronisationseinheit
- 5: Antriebswelle
- 7, 207: Erster Synchronring
- 9: Erster Außensynchronisationsring bzw. Außensynchronring
- 11: Zweiter Synchronring
- 13: Zweiter Außensynchronisationsring bzw. Außensynchronring
- 15: Schiebemuffe
- 17: Schaltmuffe
- 19: Muffeninnenverzahnung
- 21: Erstes Gangrad
- 23: Zweites Gangrad
- 25: Kupplungskörper
- 27: Synchronnabe
- 29: Losrad
- 31: Welle bzw. Getriebewelle
- 33: Erste Ausnehmung des Synchronrings
- 35: Zweite Ausnehmung des Synchronrings
- 37: Dritte Ausnehmung des Synchronrings
- 39: Ausnehmung der Nabe
- 41: Sperrverzahnung eines Außensynchronrings
- 50, 150, 250, 350, 450, 550, 650, 750, 750', 750": Druckstück
- 51: Lagerung des Druckstücks
- 53: Lagerungsstift
- 55: Erste Querstrecke
- 57: Zweite Querstrecke
- 61: Erster Eckbereich
- 63: Zweiter Eckbereich
- 65: Dritter Eckbereich
- 67: Vierter Eckbereich
- 71: Mittlerer Bereich
- 73: Mittlerer Teil
- 75: Äußere des Druckstücks bzw. der äußere Bereich des Druckstücks
- 77: Innere des Druckstücks bzw. der innere Bereich des Druckstücks
- 79, 79': Innenseite einer Querstrecke
- 81: Erster Endbereich
- 83: Zweiter Endbereich
- 85: Extremität, insbesondere in Form einer Nase, entweder als Oberflächenverlängerung oder als Fußverlängerung
- 87: Erste Seitenwand des Druckstücks
- 89: Zweite Seitenwand des Druckstücks
- 91: Kante des Druckstücks
- 93: Momentanpol
- 95: Abstand des Druckstücks
- 97, 97': Mittenerhöhung
- 99: Nuteneingriff
- 101: Muffenbetätigungselement, insbesondere als Querelement
- 103: Reibungsneutralisator
- 105: Schiebemuffennut
- 107: Synchro-Servo-Schräge
- 109: Oberfläche des Druckstücks
- 111, 211, 311, 411, 511: Druckstückfuß
- 113: Kippschräge des Muffenbetätigungselements
- 115: Rolle, insbesondere am Ende des Druckstücks gelagert
- 117: Ballenrand
- 119: Rastierfeder
- 121: Schieberille
- 651: Rastierlagerung

## Patentansprüche

1. Synchronisationsdruckstück (50, 150, 250, 350, 450, 550, 650, 750, 750', 750") für die Getriebesynchronisation (1) von Losrädern (29) über Schaltmuffen (17), insbesondere für Zahnradwechselgetriebe wie Handschaltgetriebe von Kraftfahrzeugen,
**dadurch gekennzeichnet, dass**
der als Servo-Synchronisationsdruckstück (50, 150, 250, 350, 450, 550, 650, 750, 750', 750") kippbeweglich (S, W) angeordnete Finger eine I-Form, vorzugsweise mit einem oder mehreren abgeschrägten Eckbereichen (61, 63, 65, 67), aufweist.

2. Synchronisationsdruckstück (50, 150, 250, 350, 450, 550, 650, 750, 750', 750") nach Anspruch 1, weiterhin **dadurch gekennzeichnet, dass**
das 1-förmige Druckstück (50, 150, 250, 350, 450, 550, 650, 750, 750', 750") einen mittleren, längsartigen Bereich (71) hat, der so gestaltet ist, dass er sich in einer Abtriebsrichtung (R) einer Welle (31) über die Breite (B) einer Nabe (27) der Getriebewelle (31) erstrecken kann, und mindestens eine Querstrecke (55 oder 57), vorzugsweise zwei Querstrecken (55, 57), hat, die sich in einem nahezu rechten Winkel (α1, α2) zum längsartigen Bereich (71) in Querrichtung zur Breite (B) der Nabe (27) erstrecken kann, wobei die mindestens eine Querstrecke (55, 57) den mittleren Bereich (71) des Druckstücks (50, 150, 250, 350, 450, 550, 650, 750, 750', 750") begrenzt.

3. Synchronisationsdruckstück (50, 150, 250, 350, 450, 550, 650, 750, 750', 750") nach Anspruch 2, weiterhin **dadurch gekennzeichnet, dass**
die abgeschrägten Eckbereiche (61, 63, 65, 67) von einem mittleren Teil (73) des Druckstücks (50, 150, 250, 350, 450, 550, 650, 750, 750', 750") nach Außen (75) weisend auf einer Innenseite (79, 79') der Querstrecke (55, 57) der 1-Form angeordnet sind.

4. Synchronisationsdruckstück (50, 150, 250, 350, 450, 550, 650, 750, 750', 750"), nach einem der vorstehenden Ansprüche 2 bis 3, weiterhin **dadurch gekennzeichnet, dass** ein abgeschrägter Eckbereich (61, 63, 65, 67) in gleichwinklig gestaltete Ausnehmungen (39) der Nabe (27) durch ein horizontales Abwinkeln (S) eingreifen kann.

5. Synchronisationsdruckstück (50, 150, 250, 550, 650, 750, 750', 750") nach einem der vorstehenden Ansprüche, **dadurch** weiterhin **gekennzeichnet**, dass
sich mindestens ein Endbereich (81 oder 83), vorzugsweise zwei Endbereiche (81, 83), über die innere 1-Form des Druckstücks (50, 150, 250, 550, 650, 750, 750', 750") hinaus erstreckt, der als Extremität, insbesondere als axiale oder radiale Extremität, vorzugsweise als vorstehende Nase (85), in, vorzugsweise rechtwinklige, Ausnehmungen (33, 35, 37) eines Synchronrings, die vorzugsweise breiter (95) sind als die Breite der Nase (85), vorstoßen kann.

6. Synchronisationsdruckstück (50, 150, 250, 350, 450, 550, 650, 750, 750', 750") nach einem der vorstehenden Ansprüche, weiterhin **dadurch gekennzeichnet, dass**
an wenigstens einer Seite (87, 89) des Druckstücks (50, 150, 250, 350, 450, 550, 650, 750, 750', 750") ein, insbesondere kegeliger, Momentanpol (93) vorgehalten ist.

7. Synchronisationsdruckstück (150) nach einem der vorstehenden Ansprüche, weiterhin
**dadurch gekennzeichnet, dass**
das Synchronisationsstück (150) aus einem zusammenhängenden Blechteil mit mehrfach abgerundeten oder umgebördelten Kanten (91) geschaffen ist, so dass sich ein flaches, längliches Bauteil (71) mit einem mittigen Momentanpol (93) ergibt.

8. Getriebesynchronisation (1), insbesondere in Zahnräderwechselgetrieben wie Handschaltgetriebe von Kraftfahrzeugen, vorzugsweise Personenkraftfahrzeugen, umfassend eine Schiebemuffe (15), eine Synchronnabe (27), ein Gangrad (21 oder 23), einen Synchronring (7, 207 oder 11), einen Kupplungskörper (25) und ein schwenkbewegliches (S) Druckstück (50, 150, 250, 350, 450, 550, 650, 750, 750', 750"), so dass die Teile (7, 11, 15, 21, 23, 25, 27,50, 150, 207, 250, 350, 450, 550, 650, 750, 750', 750") eine Servosynchronisation bilden,
**dadurch gekennzeichnet, dass**
das schwenkbewegliche Druckstück (50, 150, 250, 350, 450, 550, 650, 750, 750', 750") als taillierter I-förmiger Stab, insbesondere nach einem der Ansprüche 1 bis 7 ausgestaltet ist.

9. Getriebesynchronisation (1) nach Anspruch 8, weiterhin **dadurch gekennzeichnet, dass** das schwenkbewegliche (S) Druckstück (50, 150, 250, 350, 450, 550, 650, 750, 750', 750") auf Grund seiner punktförmigen Lagerung (51, 53, 119, 651) eine Schwenkbewegung (S) in radialer Umlaufrichtung (U) einer unterliegenden Antriebswelle (5) und eine horizontale Ausgleichsbewegung (W) durchführen kann.

10. Getriebesynchronisation (1) nach einem der vorstehenden Ansprüche 8 oder 9, weiterhin **dadurch gekennzeichnet, dass** das Druckstück (50, 150, 250, 350, 450, 550, 650, 750, 750', 750") mehrfach vorhanden ist, insbesondere dreifach, und über den, vorzugsweise rund umlaufenden, Umfang (U) der unterliegenden Antriebswelle (5), insbesondere gleichmäßig, verteilt angeordnet ist.

11. Getriebesynchronisation (1) nach einem der vorstehenden Ansprüche 8 bis 10, weiterhin **dadurch gekennzeichnet, dass** die Schiebemuffe (15) mit einer radialen Nut (105), die einen Kegelwinkel aufweist, versehen ist, in die eine
Mittenerhöhung (97, 97') während des Sperrens (PI) zum Drehzahlangleich und des Entsperrens (PII) bei Drehzahlgleichheit eingreift.

12. Synchronisationseinheit (3) eines Getriebes mit einem Außensynchronisationsring (9 oder 13) und einem I-förmigen Druckstück (50, 150, 250, 350, 450, 550, 650, 750, 750', 750") nach einem der Ansprüche 1 bis 7, weiterhin **dadurch gekennzeichnet, dass**
das als Vollservosynchronisationsdruckstück wirkende Druckstück (50, 150, 250, 350, 450, 550, 650, 750, 750', 750") so beweglich ist, insbesondere auf einem mittig angeordneten Lagerungstift (53), dass es in eine Ausnehmung (33, 35, 37) eines Außensynchroniationsrings (9 oder 11) eingreift, um über wenigstens eine seiner mit Schrägen (107) versehenen Querstrecken (55, 57) eine Ausgleichsbewegung (S, W) in radialer Richtung auf den Außensynchronisationsring (9 oder 11) auszuüben, wenn das Druckstück (50, 150, 250, 350, 450, 550, 650, 750, 750', 750") zuvor eine Schwenkbewegung (S) in Richtung auf eine Ausnehmung (39) der Nabe (27) der Antriebswelle (5) durchgeführt hat.

13. Synchronisationseinheit (3) nach Anspruch 12, weiterhin **dadurch gekennzeichnet, dass**
insgesamt mehrere, insbesondere drei oder fünf, Druckstücke (50, 150, 250, 350, 450, 550, 650, 750, 750', 750") vorgesehen sind, die in jeweils eine Ausnehmung (33, 35, 37), die vorzugsweise keilförmig oder trapezförmig ist, beim Sperren (PI) während des Drehzahlangleichs zwischen einem Kupplungskörper (25) und dem Außensynchronring (9 oder 11) eingreifen und nach Abschluss des Drehzahlangleichs im entsperrten Zustand (PII) in ihrer jeweiligen Ausnehmung (33, 35, 37) verharren.

14. Synchronisationseinheit (3) nach Anspruch 13, weiterhin **dadurch gekennzeichnet, dass** die Schiebemuffe (15) mit einer radialen Nut (105), die einen Kegelwinkel aufweist, versehen ist, in die ein Ende einer Mittenerhöhung (97, 97') des Druckstücks (50, 150, 250, 350, 450, 550, 650, 750, 750', 750"), insbesondere ein Ende des Lagerstifts (53), in der Phase vom Sperren (PI) bis zum Entsperren (PII) durch das Druckstück (50, 150, 250, 350, 450, 550, 650, 750, 750', 750") zum Drehzahlangleich zwischen einem Kupplungskörper (25) und einer Schiebemuffe (15) eingreift.

15. Synchronisationseinheit (3) nach einem der Ansprüche 12 bis 14 mit einem Druckstück (50, 150, 250, 350, 450, 550, 650, 750, 750', 750") nach einem der Ansprüche 1 bis 7, weiterhin **dadurch gekennzeichnet, dass**
eine Seite (87, 89) des Druckstücks (50, 150, 250, 350, 450, 550, 650, 750, 750', 750") mit einer auf den Verlauf der Ausnehmung (33, 35, 37) des Außensynchronrings (9, 11) abgestimmten Oberfläche (109), vorzugsweise durch eine durch einen Winkel (E) bestimmte Schräge, so ausgestattet ist, dass die Reibungswirkung zwischen dem Druckstück (50, 150, 250, 350, 450, 550, 650, 750, 750', 750") und dem Außensynchronring (9, 11) an der Berührungsfläche zur leichteren Entsperrung reduziert ist.

16. Synchronisationseinheit (3) nach einem der Ansprüche 14 oder 15, weiterhin **dadurch gekennzeichnet, dass** das Druckstück (50, 150, 250, 350, 450, 550, 650, 750, 750', 750") so gelagert ist, dass ihm in der Entsperrphase (PII) eine radiale Entsperrbewegung (W, S) erlaubt ist.

17. Synchronisationseinheit (3) nach einem der Ansprüche 13 bis 16, **dadurch gekennzeichnet, dass** an dem Druckstück (50, 150, 250, 350, 450, 550, 650, 750, 750', 750") nach Anspruch 5 im Bereich einer axialen oder radialen Extremität (81, 83) wie einer Nase (85) ein Keil, ein Zylinder oder eine gelagerte Rolle zum Eingriff (33, 35, 37) in den Außensynchronring (9, 11) vorhanden ist.

18. Synchronisationseinheit (3) nach einem der Ansprüche 12 bis 17, **dadurch gekennzeichnet, dass** das Druckstück (650) auf einem abgeteilten Rastierlager (651) mit insbesondere drei Freiheitsgraden gelagert ist, der durch ein elastisches Element (119) mit dem Druckstück (650) verbunden ist, so dass eine Hubbewegung (H) durch das Druckstück (650), insbesondere zum Eingriff (99) in eine Muffennut (105), ermöglicht wird, wobei ein Fuß des Druckstücks insbesondere in längsverschieblicher Lagerung ausgestaltet ist.

19. Synchronisationsverfahren mit dem eine Vollsynchronisation eines Getriebes mit Schiebemuffe (15) mit einer Nut (105), Druckstück (50, 150, 250, 350, 450, 550, 650, 750, 750', 750") und Wellennabe (27) so durchgeführt wird, dass bei gegebener Sperrsicherheit vor dem vorzeitigen Entsperren vor Drehzahlgleichheit zwischen Antriebswelle (5) und Losrad (29) die Synchronisation (1) so eingestellt wird, dass Entsperrkraft und Synchronisationskraft in gleichem Maße durch die gewählte Einstellung an Hand von geometrischen Parametern, insbesondere der Formgebungen und der Oberflächen (109), reduziert werden.

20. Synchronisationsverfahren nach Anspruch 19, weiterhin **dadurch gekennzeichnet, dass** hierzu eine Synchronisationseinheit (3) nach einem der Ansprüche 12 bis 18 verwendet wird, um insbesondere durch konstruktive Maßnahmen einen Verstärkungsfaktor einzustellen, so dass die wirksame Kraft für die Synchronisierung (1) um eine Servokraft durch Nutzung des Synchron- oder Reibmomentes höher ist als die aufgebrachte Schaltkraft und gleichzeitig die Entsperrkraft im gleichen Maße wie die Synchronisierung reduziert wird.
